# EUROPEAN PATENT APPLICATION

(11) **EP 3 214 449 A1**
(43) Date of publication of application: **06.09.2017**
(21) Application number: 16158499.0
(22) Date of filing: 03.03.2016
(51) Int. Cl.: G01N 35/00, B01L 9/06, G01N 35/04

(54) **SAMPLE CONTAINER CARRIER, LABORATORY SAMPLE DISTRIBUTION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

The invention relates to a sample container carrier for a laboratory sample distribution system, wherein a sample tube holder is non-destructively removable from a base portion and has a handling interface to be gripped by a handling device. The invention further relates to a laboratory sample distribution system comprising such a sample container carrier, and to a laboratory automation system comprising such a laboratory sample distribution system.

## Description

### Applicable field and prior art

The invention relates to a sample container carrier for a laboratory sample distribution system, to a laboratory sample distribution system comprising such a sample container carrier, and to a laboratory automation system comprising such a laboratory sample distribution system.

Sample container carriers are typically used in laboratory sample distribution systems in order to carry and transport sample containers over a transport plane of the sample distribution system.

A typical laboratory sample distribution system is shown in document WO 2013/064656 A1. Such a laboratory sample distribution system provides for a high throughput and for reliable operation.

However, it has been found that problems arise when a laboratory sample distribution system should be adapted for a plurality of different types of sample containers. For example, handling devices that are used to grip a sample container typically have to be adapted for different types of sample containers, which requires an identification of the respective type of sample container carrier. This can be done, for example, by optical recognition, which is quite complicated to implement in practice.

### Object and solution

It is thus an object of the invention to provide for a sample container carrier for a laboratory sample distribution system that allows an easier handling of sample container carriers. It is a further object to provide for a laboratory sample distribution system comprising such a sample container carrier and to provide for a laboratory automation system comprising such a laboratory sample distribution system.

This object is solved by a sample container carrier according to claim 1, a laboratory sample distribution system according to claim 9, and a laboratory automation system according to claim 10.

The invention relates to a sample container carrier for a laboratory sample distribution system, wherein the sample container carrier comprises a base portion and a sample tube holder.

The base portion comprises a bottom surface for moving or sliding over a transport plane of the laboratory sample distribution system.

The sample tube holder comprises a holding means for holding a sample container. The sample tube holder further comprises a handling interface being adapted to be gripped by a handling device, wherein the handling device is typically part of a laboratory automation system. The handling interface may be sample container unspecific.

The sample container may e.g. be embodied as a (laboratory) sample tube.

The sample tube holder and the base portion are formed such that the sample tube holder, especially when it is gripped, is insertable into the base portion and/or is removable, especially non-destructively removable, from the base portion together with the sample container being held by the holding means.

By means of the inventive sample container carrier, a handling device does not have to be adapted to a specific type of sample container for the purpose of handling the sample container, but can instead be adapted to operate uniquely with the handling interface that is universal for all types of sample container carriers, especially for all sample container carriers present in a sample distribution system.

It should be noted that a sample container carrier is typically specifically adapted for use within a sample distribution system, especially in that it is adapted to be moved on/over the transport plane by drive means.

The holding means may be adapted to hold sample containers having different sizes and/or different shapes. This can allow for a universal applicability of the holding means for different types of sample containers. Alternatively, the holding means and/or the sample tube holder may be formed specific for a given type of sample container.

According to an embodiment, the holding means comprises a height adaptation means being adapted to vary a height of a surface on which the sample container resides relative to the bottom surface. This allows for an adaptation to different heights of sample containers or to different requirements regarding a portion of the sample container that should protrude from the sample container carrier.

According to an embodiment, the holding means comprises a recess and/or a plurality of laterally disposed springs for holding the sample container. This allows for an easy adaptation to different types of sample containers.

According to an embodiment, the sample tube holder is at least partially transparent. This allows for optical recognition of items like barcodes on the sample container even if the respective item is positioned or placed in the sample tube holder.

The sample tube holder can also be totally transparent and/or can be made of transparent material.

According to an embodiment, the sample tube holder comprises a RFID tag, preferably a passive RFID tag. This allows for writing of relevant information to the RFID tag, for example regarding the type of sample container and regarding the sample contained in the sample container. Data relating to a patient from which the sample has been taken or relating to suspected diseases or analytic actions that are to be performed with the sample can be written to the RFID tag.

It should be noted that the RFID tag, which may be embodied as a passive RFID tag, can be positioned at the sample tube holder for fast and efficient reading and writing.

To handle a sample container, the sample container or the sample container carrier typically does not have to be rotated in order to read certain data, for example a barcode. Such data can, for example, be written to the RFID tag. Further, a sample container typically does not have to be touched when using a sample container carrier according to the invention, because the handling device only interacts with the handling interface.

Means for reformatting or for optical recognition can be avoided when using the inventive sample container carrier.

According to an embodiment, the handling interface is located above the base portion when the sample tube holder is inserted into the base portion. This allows for an easy access to the handling interface.

According to an embodiment, the handling interface is (comprises) an annular ring or an annular groove. This allows for an easy handling of the handling interface by a handling device irrespective of a rotational position of the sample container.

The invention further relates to a laboratory sample distribution system.

The laboratory sample distribution system comprises a transport plane.

The laboratory sample distribution system comprises a number of sample container carriers according to the invention. With respect to the sample container carriers, all embodiments and variations discussed herein can be applied.

The laboratory sample distribution system comprises drive means being adapted to move the sample container carriers on the transport plane.

The laboratory sample distribution system comprises a control device being configured to control the movement of the sample container carriers on top of the transport plane by driving the drive means such that the sample container carriers move along corresponding transport paths.

The laboratory sample distribution system comprises a handling device for gripping and inserting the sample tube holder of one of the sample container carriers into the base portion of the sample container carrier and/or removing the sample tube holder of the sample container carrier from the base portion of the sample container carrier together with the sample container being held by the holding means.

The handling device can handle the sample container independent from the type of the handled sample container and can use the sample container type unspecific handling interface that is typically identical for all sample container carriers present on the transport plane.

According to an embodiment, the drive means are formed as electro-magnetic actuators being located below the transport plane and being controllable by the control device. The sample container carriers may each comprise a magnetically active device for interaction with a magnetic field generated by the electro-magnetic actuators such that a magnetic drive force is applied to the sample container carriers.

This allows for an efficient and reliable driving of the sample container carriers by using magnetic forces.

According to an embodiment, the drive means are formed as wheels driven by electric motors being located in the sample container carriers and being controllable by the control device. This allows for an alternative implementation, in which the sample container carriers drive themselves using the electric motors.

The invention relates further to a laboratory automation system, comprising a number (e.g. 1 to 100) of laboratory stations, preferably pre-analytical, analytical and/or post-analytical stations, and a laboratory sample distribution system according to the invention. With respect to the laboratory sample distribution system, all embodiments and variations discussed herein can be applied.

The laboratory sample distribution system can be adapted to transport the sample container carriers and/or sample containers between the stations. The stations may be arranged adjacent to the laboratory sample distribution system.

Pre-analytical stations may be adapted to perform any kind of pre-processing of the samples, sample containers and/or sample container carriers.

Analytical stations may be adapted to use a sample or part of the sample and a reagent to generate a measuring signal, the measuring signal indicating if and in which concentration, if any, an analyte is existing.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, and a sample quality determining station.

The invention will now be described in detail with respect to the drawings, in which
- Fig. 1: schematically shows a side view of a laboratory automation system according to the invention, and
- Fig. 2: schematically shows a top view of a sample tube holder gripped by a handling device.

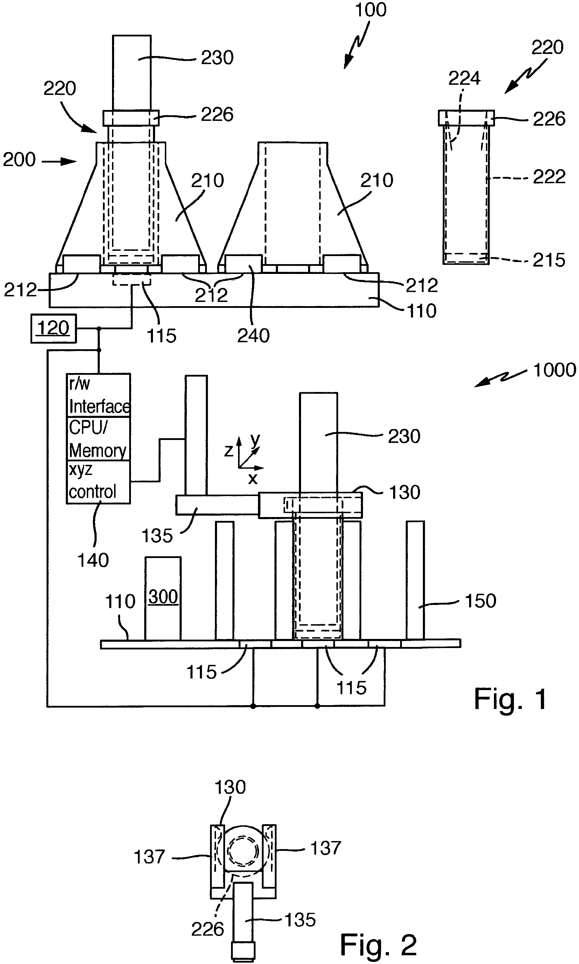

Fig. 1 schematically shows a laboratory automation system 1000 according to the invention.

The laboratory automation system 1000 comprises a number of laboratory stations 300 and a laboratory sample distribution system 100. For the purpose of explanation, only one laboratory station 300 is shown. Self-evidently, the laboratory automation system 1000 typically comprises more than one laboratory station 300, e.g. between 2 and 20 laboratory stations.

The laboratory sample distribution system 100 comprises a transport plane 110.

The laboratory sample distribution system 100 further comprises a number (e.g. 64 to 2048) of drive means in form of electro-magnetic actuators 120 being arranged under the transport plane 110. For the purpose of explanation, only one electro-magnetic actuator 120 is shown. Self-evidently, the sample distribution system 100 typically comprises more than one electro-magnetic actuator 120. The electro-magnetic actuators may be arranged in rows and columns forming a grid.

The laboratory sample distribution system 100 further comprises a number (e.g. 10 to 1000) of sample container carriers 200.

The drive means 120 are adapted to move the sample container carriers 200 on/over the transport plane 110 by contactlessly applying a magnetic drive force to the sample container carriers 200. To cause the magnetic drive force, the sample container carriers 200 may e.g. comprise a permanent magnet interacting with an alternating magnetic field generated by the drive means 120.

The sample container carriers 200 respectively comprise a base portion 210. The base portion 210 comprises gliding blocks 240 having a bottom surface 212 for sliding over the transport plane 110. The gliding blocks 240 allow for reduced friction and increased stability due to the increased diameter.

The sample container carriers 200 further respectively comprise a sample tube holder 220.

The sample tube holder 220 comprises a holding means 222 in the form of a spring arrangement 224 for holding and fixing a sample container 230 inserted into the sample tube holder 220. The spring arrangement 224 is embodied as an annular spring. Thus, the sample container 230 can be fixed inside the sample tube holder 220 even if the diameter of the sample container 230 is not standardized, meaning that a plurality of different types of sample containers 230, especially having different diameters, can be used.

The sample tube holders 220 further comprise a handling interface 226 being adapted to be gripped by a handling device 130 of the laboratory sample distribution system 100. The handling interface 226 is embodied as an annular ring that can easily be gripped by the handling device 130.

On the upper right side of figure 1 the base portion 210 and the corresponding sample tube holder 220 of a sample container carrier 200 are depicted separate from one another. On the upper left side the sample tube holder 220 is inserted into the corresponding base portion 210 of a sample container carrier 200, wherein the sample tube holder 220 holds a sample container 230.

The sample tube holder 220 and the base portion 210 are formed such that the sample tube holder 220 is insertable into the base portion 210 and is removable from the base portion 210 together with the sample container 230 being held by the holding means 222. For that purpose, the base portion 210 may comprise a recess being geometrically formed such that the sample tube holder 220 may be inserted into the recess as depicted.

The laboratory sample distribution system 100 further comprises the handling device 130 for gripping and inserting the sample tube holder 220 of one of the sample container carriers 200 into the corresponding base portion 210 of the sample container carrier 200 and/or removing the sample tube holder 220 of the sample container carrier 200 from the corresponding base portion 210 of the sample container carrier 200, in each case together with the sample container 230 being held by the holding means 222. The handling device 130 grips the sample tube holder 220 at the handling interface 226.

The sample tube holder 220 is non-destructively removable from the base portion 210. Typically, no mechanism has to be operated in order to remove the sample tube holder 220 from the corresponding base portion 210. Alternatively, a mechanism may be operated in order to make such a removal.

The sample tube holder 220 further comprises a passive RFID tag 215 at its bottom end. By means of the RFID tag 215 processing relevant data can be stored in the sample tube holder 220.

Under the transport plane 110 RFID read/write antennas 115 are provided. Using these antennas 115, it is possible to write data to the RFID tags 215 of the sample tube holders 220 and to read data correspondingly.

The lower portion of figure 1 schematically depicts the handling device 130 and a tube holder rack 150. The tube holder rack 150 is typically arranged in or in the vicinity of an analyzer 300. The tube holder rack 150 is placed on top of the transport plane 110. The transport plane 110 in the upper section of figure 1 and the transport plane 110 in the lower sections of figure 1 may have the same vertical level or may have different vertical levels.

The handling device 130 comprises a robot arm 135 and a gripper 137 (see figure 2), wherein the gripper 137 is arranged at an end of the robot arm 135. The handling device 130 may move in x-, y-, and z-direction.

A control device 140 of the laboratory sample distribution system 100 comprises an interface to the RFID antennas 115, a CPU, a memory, and a xyz-control. By means of the xyz-control, the control device 140 controls the movement of the robot arm 135 in space. The memory can contain program code that is to be executed by the CPU in order to perform in a certain manner, especially as described above. The control device 140 can also be adapted to control movement of the sample container carriers 200 on the transport plane 110, for example by controlling the electro-magnetic actuators 120.

Fig. 2 schematically shows a top view of a sample tube holder 220 gripped by the gripper 137 of the handling device 130. The gripper 137 grips the sample tube holder 220 exclusively at its handling interface 226.

The robot arm 135 moves such that the gripper 137 may engage with the handling interface 226 of the sample tube holder 220 and then moves the sample tube holder 220 together with the held sample container 230 out of the base portion 210 of the sample container carrier 200 and subsequently inserts the sample tube holder 220 together with the held sample container 230 into the tube holder rack 150.

According to the invention, sample containers 230 are not handled directly, e.g. by gripping the sample container 230 directly by means of a gripping device. Instead, when entering the laboratory automation system 1000 the sample containers 230 are inserted into the sample tube holders 220, wherein the sample tube holders 220 serve as a standardized mechanical handling interface in each processing step of the laboratory analysis. After being inserted into the sample tube holders 220, the sample containers 230 are handled together with the corresponding sample tube holder 220, e.g. are inserted into the tube holder rack 150 together with the corresponding sample tube holder 220.

The handling device 130 may be part of the laboratory sample distribution system 100, part of the laboratory automation system 1000 or part of the laboratory stations 300.

## Claims

1. Sample container carrier (200) for a laboratory sample distribution system (100), wherein the sample container carrier (200) comprises:
- a base portion (210) comprising a bottom surface (212) for moving over a transport plane (110) of the laboratory sample distribution system (100), and
- a sample tube holder (220), wherein the sample tube holder (220) comprises:
- a holding means (222) for holding a sample container (230), and
- a handling interface (226) being adapted to be gripped by a handling device (130),
- wherein the sample tube holder (220) and the base portion (210) are formed such that the sample tube holder (220) is insertable into the base portion (210) and/or is removable from the base portion (210) together with the sample container (230) being held by the holding means (222).

2. Sample container carrier (200) according to claim 1, **characterized in that**
- the holding means (222) is adapted to hold sample containers (230) having different sizes and/or different shapes.

3. Sample container carrier (200) according to one of the preceding claims, **characterized in that**
- the holding means (222) comprises a height adaptation means being adapted to vary a height of a surface on which the sample container (230) resides relative to the bottom surface (212).

4. Sample container carrier (200) according to one of the preceding claims, **characterized in that**
- the holding means (222) comprises a recess and/or a plurality of laterally disposed springs (224) for holding the sample container (230).

5. Sample container carrier (200) according to one of the preceding claims, **characterized in that**
- the sample tube holder (220) is at least partially transparent.

6. Sample container carrier (200) according to one of the preceding claims, **characterized in that**
- the sample tube holder (220) comprises an RFID tag (215), preferably a passive RFID tag.

7. Sample container carrier (200) according to one of the preceding claims, **characterized in that**
- the handling interface (226) is located above the base portion (210), when the sample tube holder (220) is inserted into the base portion (210).

8. Sample container carrier (200) according to one of the preceding claims, **characterized in that**
- the handling interface (226) is embodied as an annular ring or an annular groove.

9. Laboratory sample distribution system (100), comprising
- a transport plane (110),
- a number of sample container carriers (200) according to one of the preceding claims,
- drive means (120) being adapted to move the sample container carriers (200) on the transport plane (110),
- a control device (140) being configured to control the movement of the sample container carriers (200) on top of the transport plane (110) by driving the drive means such that the sample container carriers (200) move along corresponding transport paths, and
- a handling device (130) for gripping and inserting the sample tube holder (220) of one of the sample container carriers (200) into the base portion (210) of the sample container carrier (200) and/or removing the sample tube holder (220) of the sample container carrier (200) from the base portion (210) of the sample container carrier (200) together with the sample container (230) being held by the holding means (222).

10. Laboratory automation system (1000), comprising
- a number of laboratory stations (300), preferably pre-analytical, analytical and/or post-analytical stations, and
- a laboratory sample distribution system (100) according to claim 9.
